# EUROPEAN PATENT SPECIFICATION

(11) **EP 4 099 211 B1**
(45) Date of publication and mention of the grant of the patent: **17.12.2025**
(21) Application number: 21176922.9
(22) Date of filing: 31.05.2021
(51) Int. Cl.: G06F 18/214, G06F 18/2413, G06F 18/25, G06V 10/25, G06V 10/42, G06V 20/56, G06V 10/774, G06V 10/82

(54) **METHOD AND DEVICE FOR TRAINING A MACHINE LEARNING ALGORITHM**
VERFAHREN UND VORRICHTUNG ZUM TRAINIEREN EINES MASCHINENLERNALGORITHMUS
PROCÉDÉ ET DISPOSITIF D'APPRENTISSAGE D'UN ALGORITHME D'APPRENTISSAGE AUTOMATIQUE

(43) Date of publication of application: 07.12.2022
(73) Proprietor: Aptiv Technologies AG, 8200 Schaffhausen (CH)
(72) Inventor: SCHOELER, Markus, 42853 Remscheid (DE); SIEGEMUND, Jan, 50825 Köln (DE); NUNN, Christian, 42499 Hückeswagen (DE); SU, Yu, 42287 Wuppertal (DE); MEUTER, Mirko, 40699 Erkrath (DE); BECKER, Adrian, 51375 Leverkusen (DE); CREMER, Peet, 40239 Düsseldorf (DE)
(74) Representative: Manitz Finsterwald Patent- und Rechtsanwaltspartnerschaft mbB

(56) References cited:
- US-A1- 2021 103 027
- US-A1- 2021 156 963
- MANUEL CARRANZA-GARC\'IA ET AL: "Enhancing Object Detection for Autonomous Driving by Optimizing Anchor Generation and Addressing Class Imbalance", ARXIV.ORG, CORNELL UNIVERSITY LIBRARY, 201 OLIN LIBRARY CORNELL UNIVERSITY ITHACA, NY 14853, 8 April 2021 (2021-04-08), XP081936390, DOI: 10.1016/J.NEUCOM.2021.04.001

## Description

### FIELD

The present disclosure relates to a method and a device for training a machine learning algorithm which is configured to process primary data captured by at least one primary sensor in order to determine at least one property of entities in the environment of the primary sensor.

### BACKGROUND

For driver assistance systems and for autonomous driving of vehicles, a reliable perception and understanding of the environment of the vehicles is essential. In order to understand the environment around the vehicle, a radar sensor is typically used, and a machine learning algorithm may be applied to radar data captured by the radar sensor. By such a machine learning algorithm, bounding boxes may be estimated for objects detected in the environment of the vehicle, or a semantic segmentation may be performed in order to classify detected objects.

The machine learning algorithm, however, requires a supervised learning or training procedure for which labeled data are used. The labeled data for supervised learning includes data or input from the radar sensor and labels which are also known as ground truth being related to the input. In other words, for the learning or training procedure input data has to be provided for which the expected output is known as ground truth for the machine learning algorithm.

The acquisition of labeled data is currently a lengthy process which includes recording input data, processing the data and labeling the data e.g. by a human or automatic annotation. For sparse radar point clouds which are typically acquired by a radar sensor in a vehicle, it is a very challenging task to recognize and label objects. If the preprocessed radar data include information regarding a range, a range rate and an antenna response for objects in the environment of a vehicle (such data is referred to as a three-dimensional compressed data cube), the labeling of the data cannot be performed on the radar data directly.

In order to provide a reliable ground truth for a machine learning algorithm using radar data, data from a different sensor may be acquired (e.g. from a camera or a Lidar system). Such data may be easier to be labeled due to their dense structure in comparison to the sparse radar data. The labels generated based on the data from a different or auxiliary sensor can be transferred to the radar domain and used as a ground truth for the radar input data. Such a procedure is referred to as cross-domain labeling or cross-domain training. That is, dense auxiliary data, e.g. from the camera or from the Lidar system, may be used for providing labels for training the machine learning algorithm which relies on primary data provided by the radar sensor.

However, objects or labels may be recognizable for the auxiliary or source sensor only, i.e. within dense Lidar or camera data, but not for the primary radar sensor which provides a sparse radar point cloud. As a consequence, the training procedure forces the machine learning algorithm to predict objects or labels where no signature for these labels or objects may be found in the corresponding primary radar data. That is, the machine learning algorithm is forced to "see" labels or objects where almost no data is available via the radar sensor. This problem is aggravated if the training is performed by using hard sample mining techniques which use e.g. focal loss. These techniques may assign exponentially increased rates to harmful samples or labels during the training. Therefore, false detection rates may be increased for the resulting trained models.

US 2021/0156963 A1 discloses a a computer implemented method for training a machine learning algorithm which is configured to process radar data captured by a radar sensor in order to detect moving and stationary obstacles in the environment of the radar sensor. Auxiliary data are provided via a Lidar sensor, and labels are identified based on the auxiliary data, wherein the labels are related to a respective spatial area. A care attribute is assigned to the respective label if a number of radar detections associated with the respective label is equal to or greater than a threshold number. A loss function is defined for the training of the machine learning algorithm. Positive contributions to the loss function are permitted for labels having a care attribute.

Accordingly, there is a need to have a method and a device which are able to increase the reliability of a cross-domain training procedure, i.e. a procedure using data from an auxiliary sensor for training a machine learning algorithm which relies on data from a primary sensor.

### SUMMARY

The present invention provides a computer implemented method, a device, a computer system and a non-transitory computer readable medium according to the independent claims. Embodiments are given in the subclaims, the description and the drawings.

In one aspect, the present invention is directed at a computer implemented method according to claim 1.

Generally, the method includes two stages or phases. In a first stage, the labels are provided as ground truth to generate a prerequisite for the training procedure itself. In detail, the labels are identified by annotating the auxiliary data from the at least one auxiliary sensor which may be a Lidar system or a camera capturing dense auxiliary data. In a second stage, the training of the machine learning algorithm is performed by evaluating model predictions with respect to the labels based on the loss function. In addition to simply providing labels based on the auxiliary data for enabling the cross-domain training, each label receives an additional attribute which controls how the respective label is to be considered during the training procedures.

The at least one primary sensor may be installed in a vehicle and may include radar sensors providing a sparse radar point cloud. Entities in the environment of the primary sensor may therefore be objects surrounding the vehicle. For such entities or objects, the machine learning algorithm determines at least one property, e.g. the spatial location of objects by generating a bounding box which encloses the respective object. As a further example for determining at least one property of entities, a semantic segmentation may be performed which may assign the objects surrounding a vehicle to respective object classes. Such object classes may be "other vehicle", "pedestrian", "animal", etc.

For the training stage of the machine learning algorithm, it is essential to provide a reliable loss function in order to achieve a desired certainty for the result of the machine learning algorithm. The loss function includes a comparison between the output, i.e. the predictions of the machine learning algorithm, and the desired output which is represented by the labels. Wrong or undesired outputs are "penalized" which is referred to as a negative contribution to the loss function, whereas a positive contribution to the loss function will strengthen the correct prediction of a label via the machine learning algorithm. Therefore, labels to which a care attribute is assigned are permitted to provide such a positive contribution to the loss function since it is expected that these labels have a counterpart within the primary data provided by the at least one primary sensor.

If the labels are provided with a no-care attribute, positive contributions are considered dynamically in the loss function. Since the machine learning algorithm typically outputs confidence values for the model predictions, the respective label is additionally considered, but only if its confidence value is greater than a predetermined threshold. The predetermined threshold may be greater than or equal to zero and smaller than one. That is, the positive contributions of the labels having a no-care attribute can be considered dynamically by the method by adapting the predefined threshold for the confidence value.

The goal of the training procedure for the machine learning algorithm is to minimize the loss function in order to provide e.g. reliable parameters or weights for layers of the algorithm. By validating the labels which are provided based on the auxiliary data, i.e. via the care or no-care attribute, it can be avoided that the training procedure forces the machine learning algorithm to output model predictions for labels which are not recognizable within the primary data of the at least one primary sensor. Therefore, the reliability of the training procedure is enhanced by validating the cross-domain labels via the care and no-care attributes.

However, the labels having a no-care attribute are considered dynamically regarding their positive contributions to the loss function, which allows the machine learning algorithm to utilize complex queues, e.g. temporal and/or multipath reflections, if the at least one primary sensor includes radar sensors. By this means, occluded and no-cared objects may be found via the machine learning algorithm by using e.g. sparse radar data. In other words, finding objects as an exception based on temporal or multipath radar reflections may not generally be prevented for the machine learning algorithm by including the positive contributions of no-care labels dynamically.

Identifying labels based on the auxiliary data includes determining a respective spatial area to which each label is related, and a reference value for the respective spatial area is determined based on the primary data. For each label, a care attribute is assigned to the respective label if the reference value is greater than a reference threshold. The perception capability of the at least one primary sensor is therefore determined by considering the spatial area related to the respective label, e.g. by considering a bounding box which represents the spatial area in which an object is located. Such a bounding box may be determined e.g. based on dense data from a Lidar system or a camera. The reference value for the spatial area of a label may be e.g. an average of an intensity of the primary data within the spatial area. Due to the relationship of the reference value for the primary data to the spatial area corresponding to the respective labels, the reliability for assigning the care or no-care attribute is enhanced.

The method may comprise one or more of the following features:
The predetermined threshold for the confidence value may be zero. The at least one primary sensor may include at least one radar sensors, and the reference value may be determined based on radar energy detected by the radar sensor within the spatial area to which the respective label is related.

Ranges and angles at which radar energy is perceived may be determined based on the primary data captured by the radar sensor, and the ranges and angles may be assigned to the spatial areas to which the respective labels are related in order to determine the care attribute or the no-care attribute for each label. An expected range, an expected range rate and an expected angle may be estimated for each label based on the auxiliary data, and the expected range, the expected range rate and the expected angle of the respective label may be assigned to a range, a range rate and an angle derived from the primary data of the radar sensor in order to determine the radar energy associated with the respective label. The expected range rate may be estimated for each label based on a speed vector which is estimated for a respective label by using differences of label positions determined based on the auxiliary data at different points in time.

A subset of auxiliary data points may be selected which are located within the spatial area related to the respective label, and for each auxiliary data point of the subset, it may be determined whether a direct line of sight exists between the at least one primary sensor and the auxiliary data point. For each label, a care attribute may be assigned to the respective label if a ratio of a number of auxiliary data points for which the direct line of sight exists to a total number of auxiliary data points of the subset is greater than a further predetermined threshold. The at least one primary sensor may include a plurality of radar sensors, and the auxiliary data point may be regarded as having a direct line of sight to the at least one primary sensor if the auxiliary data point is located within an instrumental field of view of at least one of the radar sensors and has a direct line of sight to at least one of the radar sensors.

For each of the radar sensors, a specific subset of the auxiliary data points may be selected for which the auxiliary data points are related to a respective spatial area within an instrumental field of view of the respective radar sensor. The auxiliary data points of the specific subset may be projected to a cylinder or sphere surrounding the respective radar sensor. A surface of the cylinder or sphere may be divided into pixel areas, and for each pixel area, the auxiliary data point having a projection within the respective pixel area and having the closest distance to the respective radar sensor may be marked as visible. For each label, a number of visible auxiliary data points may be determined which are located within the spatial area related to the respective label and which are marked as visible for at least one of the radar sensors. The care attribute may be assigned to the respective label if the number of visible auxiliary data points is greater than a visibility threshold.

Identifying labels based on the auxiliary data may include determining a respective spatial area to which each label is related, and a reference value for the respective spatial area may be determined based on the primary data. In addition, a subset of auxiliary data points may be selected which are located within the spatial area related to the respective label, and for each auxiliary data point of the subset, it may be determined whether a direct line of sight exists between the at least one primary sensor and the auxiliary data point. For each label, a care attribute may be assigned to the respective label if i) the reference value is greater than a reference threshold and ii) a ratio of a number of auxiliary data points for which the direct line of sight exists to a total number of auxiliary data points of the subset is greater than a further predetermined threshold.

According to an embodiment, the predetermined threshold for the confidence value may be zero. In this case, the positive contributions of labels having a no-care attribute are not considered for the loss function. Hence, the effort for performing the method may be reduced due to this simplification. However, considering the above-mentioned "complex queues" may be suppressed since e.g. temporal and/or multipath reflections detected by a radar sensor may generally be excluded.

The at least one primary sensor may include at least one radar sensor, and the reference value may be determined based on radar energy detected by the radar sensor within the spatial area to which the respective label may be related. That is, the care attribute may be assigned to a respective label only if enough radar energy is detected within the spatial area of the label. Conversely, labels having almost no radar energy within their spatial area may receive the no-care attribute and may therefore have a lower or even no weight within the training procedure of the machine learning algorithm.

Furthermore, ranges and angles at which radar energy is perceived may be determined based on the primary data captured by the radar sensor, and the ranges and angles may be assigned to the spatial areas to which the respective labels may be related in order to determine the care attribute or the no-care attribute for each label. The angles may be determined by applying an angle finding algorithm to the primary or radar data, e.g. by applying a fast Fourier transform (FFT) or an iterative adaptive approach (IAA). Based on the ranges and angles which are determined via the radar data, spatial locations may be identified at which labels may be recognizable for the primary or radar sensor. That is, the perception capability of the primary or radar sensor is represented by a detailed spatial map of the perceived radar energy. Hence, the decision for assigning a care or no-care attribute to a label may be improved by such a detailed map.

Furthermore, an expected range, an expected range rate and an expected angle may be estimated for each label based on the auxiliary data. The expected range, the expected range rate and the expected angle of the expected label may be assigned to a range, a range rate and an angle derived from the primary data of the radar sensor in order to determine the radar energy which is associated with the respective label. The range, the range rate and the angle which are derived from the primary data may be regarded as compressed data cube for the primary or radar data. For each element of this data cube, a respective radar energy may be detected. The expected values for the range, the range rate and the angle which are related to a specific label may therefore be used to perform a so-called reverse lookup in the compressed data cube provided by the radar data in order to determine the radar energy which may be associated with the respective label. For this embodiment, the range rate may be included as a further parameter which may facilitate determining the proper radar energy for the label if the angle resolution of the radar sensor may be low. Hence, the accuracy for determining the radar energy and therefore the accuracy for properly assigning the care and no-care attributes may be enhanced.

The expected range rate may be estimated for each label based on a speed vector which may be determined for the respective label by using differences of label positions determined based on the auxiliary data at different points in time. The label positions may be related to the respective spatial area to which each label may be related. That is, the movement of such a spatial area may be monitored by monitoring the differences of the label positions. In order to determine the expected range rate, the speed vector may be projected to a range direction, i.e. to a radial direction defined by a line from the at least one primary sensor to the spatial area or position of the label. Using the position differences per time and the projection to the radial direction may be a straightforward manner to estimate the expected range rate which may require a low computational effort.

According to a further embodiment, a subset of auxiliary data points may be selected which may be located within the spatial area related to the respective label. For each auxiliary data point of the subset, it may be determined whether a direct line of sight exists between the at least one primary sensor and the auxiliary data point. A ratio of a number of auxiliary data points for which such a direct line of sight may exist to a total number of auxiliary data points of the subset may be estimated. If this ratio is greater than a further predetermined threshold, a care attribute may be assigned to the respective label. Such an assignment may be performed for each label.

For labels representing static objects, it may be difficult to perform the above-mentioned mapping of the expected range rate and the expected angle (in addition to the expected range) to the radar energy if the angle resolution of the radar sensor is low and the range rate is approximately zero for the static object. Therefore, the existence of direct lines of sight may be checked for the auxiliary data points belonging to the respective label in order to determine whether the respective label may be occluded for the at least one primary sensor. Therefore, the ambiguity may be overcome which is caused by the low angle resolution and the range rate of almost zero and which may lead to an improper tagging of the label regarding the care and no-care attributes. Therefore, the accuracy of the care or no-care tagging may be improved by additionally considering such a "geometric tagging" which examines the existence of direct lines of sight.

The at least one primary sensor may include a plurality of radar sensors, and the auxiliary data point may be regarded as having a direct line of sight to the at least one primary sensor if the auxiliary data point is located within an instrumental field of view of the respective radar sensor and has a direct line of sight to at least one of the radar sensors. For this embodiment, the "visibility" of a respective label may be examined e.g. antenna by antenna for an antenna array representing the plurality of radar sensors. Hence, the accuracy of the care and no-care tagging of the label may be improved since the label has to be visible for one of the radar sensors only in order to be regarded as visible.

According to a further embodiment, for each of the radar sensors a specific subset of the auxiliary data points may be selected for which the auxiliary data points may be related to respective spatial area within an instrumental field of view of the respective radar sensor, and the auxiliary data points of the specific subset may be projected to a cylinder or sphere surrounding the respective radar sensor. A surface of the cylinder or sphere may be divided into pixel areas, and for each pixel area, the auxiliary data point having a projection within the respective pixel area and having the closest distance to the respective radar sensor may be marked as visible. For each label, a number of visible auxiliary data points may be determined which are located within the spatial area related to the respective label and which are marked as visible for at least one of the radar sensors. The care attribute may be assigned to the respective label if the number of visible auxiliary data points is greater than a visibility threshold.

By this means, it may be controlled in detail via the visibility threshold under which conditions the label is regarded as visible or occluded for the at least one primary sensor, e.g. for a respective antenna belonging to the respective radar sensor. This may improve the care and no-care tagging of the labels if they represent a plurality of objects arranged close to each other such that these objects may generally occlude each other at least partly.

According to a further embodiment, identifying labels based on the auxiliary data may include determining respective spatial area to which each label may be relate, and a reference value for the respective spatial area may be determined based on the primary data. A subset of auxiliary data points may be selected which may be located within the spatial area related to the respective label, and for each auxiliary data point of the subset, it may be determined whether a direct line of sight exists between the at least one primary sensor and the auxiliary data point. For each label, a care attribute may be assigned to the respective label only if i) the reference value is greater than a reference threshold and ii) a ratio of a number of auxiliary data points for which the direct line of sight exists to a total number of auxiliary data points of the subset is greater than a further predetermined threshold.

For this embodiment, the determination of the reference value which may be e.g. a value for the radar energy, and the "geometric tagging" using lines of sight as described above are combined. That is, the respective label is provided with a care attribute only if both conditions mentioned above are fulfilled, i.e. if the reference value, e.g. the radar energy, is sufficiently high and if the line of sight exists. Therefore, the reliability for assigning the care and no-care attributes to the respective label may be improved.

In another aspect, the present invention is directed at a device according to claim 11.

As used herein, the terms processing device, processing unit and module may refer to, be part of, or include an Application Specific Integrated Circuit (ASIC); an electronic circuit; a combinational logic circuit; a field programmable gate array (FPGA); a processor (shared, dedicated, or group) that executes code; other suitable components that provide the described functionality; or a combination of some or all of the above, such as in a system-on-chip. The term module may include memory (shared, dedicated, or group) that stores code executed by the processor. In summary, the device according to the disclosure includes the at least one primary sensor, the at least one auxiliary sensor and the processing unit which are configured to perform the steps as described above for the corresponding method. Therefore, the benefits, the advantages and the disclosure as described above for the method are also valid for the device according to the disclosure.

According to an embodiment, the at least one primary sensor may include at least one radar sensors, and the at least one auxiliary sensor may include at least one Lidar sensor and/or at least one camera. Since these sensors may be available in a modern vehicle, the implementation of the device may require a low effort.

In another aspect, the present invention is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present invention is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid-state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: depicts a so-called activation tagging for labels representing vehicles surrounding a host vehicle,
- Fig. 2: depicts a scheme for determining whether an object or label is occluded for a radar sensor,
- Fig. 3: depicts an example for a so-called geometric tagging for labels which represent vehicles surrounding the host vehicle, and
- Fig. 4: depicts the improvement in terms of precision and recall which is achieved by the method and the device according to the disclosure.

### DETAILED DESCRIPTION

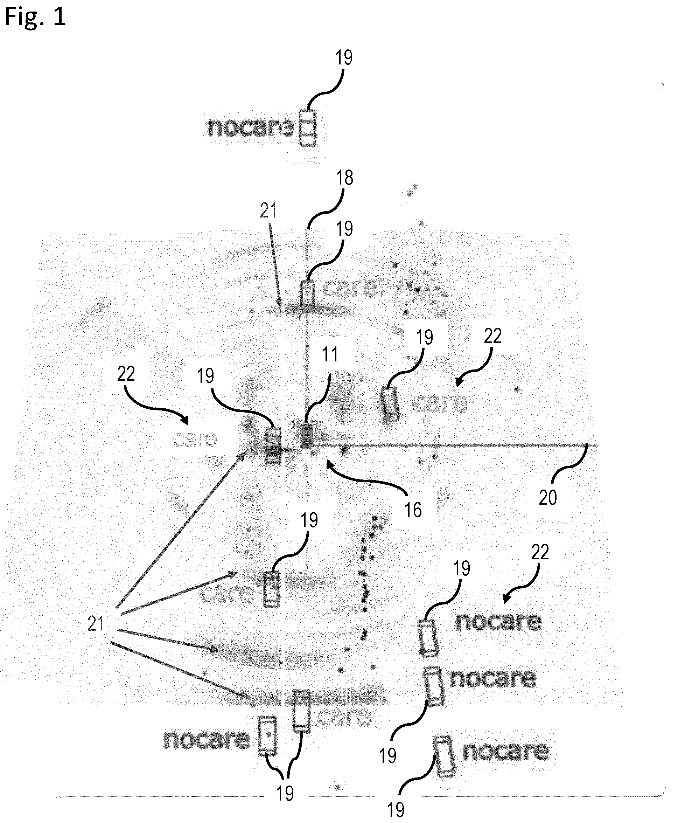

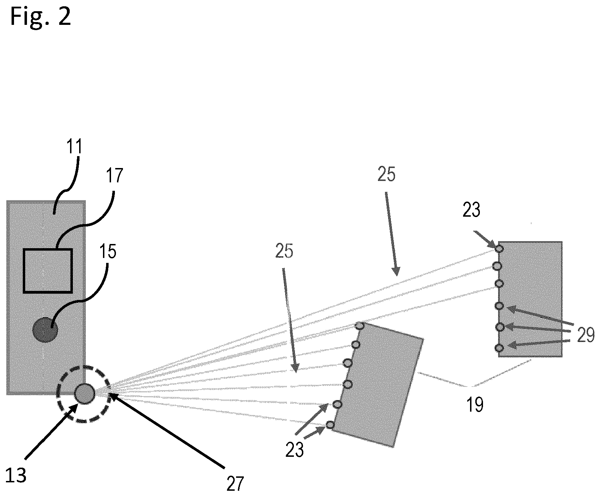

Figs. 1 and 2 depict a host vehicle 11 which includes radar sensors 13 (see Fig. 2) and a Lidar system 15 which are in communication with a processing unit 17. As shown in Fig. 1, other vehicles are located in the environment of the host vehicle 11. The other vehicles are represented by bounding boxes 19 which are also referred to as labels 19 since these bounding boxes are provided based on data from the Lidar system 15 for training a machine learning algorithm. The training of the machine learning algorithm is performed via the processing unit 17 (which also executes the algorithm itself) and uses primary data provided by the radar sensors 13.

The primary data or input for the training is received from the radar sensors 13 and is represented as normalized radar energy 21 which is depicted in the form of shadows (as indicated by the arrows) in Fig. 1. The normalized radar energy 21 refers to a vehicle coordinate system 16 having an x-axis 18 along the longitudinal axis of the host vehicle 11 and a y-axis 20 along the lateral direction with respect to the host vehicle 11. In detail, the maximum radar energy is shown in Fig. 1 only for all doppler or range rate values derived from raw radar data. For the method and the device according to the disclosure, however, the full range rate or doppler information is used.

Fig. 1 depicts a scene in which the host vehicle 11 is driving in a lane on a highway and in which the vehicle represented by the labels or bounding boxes 19 on the right side are moving on a further lane which leads to the highway as a downward pointing ramp. That is, the lane in which the four vehicles on the right side are moving joins the highway in the upper part of Fig. 1.

The Lidar system 15 (see Fig. 2) is mounted on the roof of the host vehicle 11, whereas the radar sensors 13 are mounted at the height of a bumper of the host vehicle 11. Therefore, the Lidar system 15 has direct lines of sight to all labels 19 representing other vehicles, whereas some of the labels 19 are blocked for the lower mounted radar sensors 13. Therefore, if the labels 19 provided by the Lidar system 15 were directly used for training the machine learning algorithm which relies on the primary data captured by the radar sensors 13, the labels 19 would force the machine learning algorithm to predict objects for which no reliable primary data from the radar sensors 13 are available.

The labels 19 which are derived from the data provided by the Lidar system 15 are used as ground truth for a cross-domain training of the machine learning algorithm since reliable labels cannot be derived from the radar data directly, i.e. neither by humans nor by another automated algorithm, as can be recognized by the representation of the normalized radar energy 21 in Fig. 1. The machine learning algorithm is implemented as a radar neural network which requires a cross-domain training via the labels 19 provided by the Lidar system 15. The Lidar system 15 is therefore regarded as auxiliary sensor which provides auxiliary data from which the labels 19 are derived.

In order to avoid the above problem, i.e. forcing the radar neural network to predict objects which are not recognizable for the radar sensors 13, the labels 19 are additionally provided with an attribute 22 which indicates how the respective label 19 is to be considered for the training of the machine learning algorithm. In detail, each label 19 is provided with a care attribute or a no-care attribute, wherein the care attribute indicates that the respective label is to be fully considered for the training of the machine learning algorithm or radar neural network, whereas specific labels 19 provided with the no-care attribute are partly considered only for the training of the radar neural network. This will be explained in detail below. Since the labels 19 are adapted by the attribute 22 in order to provide a ground truth for cross-domain training of a radar neural network, the entire procedure is referred to as ground truth adaptation for a cross-domain training of radar neural networks (GARNN).

For assigning the attribute 22, i.e. a care attribute or a no-care attribute, to the ground truth labels 19 derived from auxiliary data which are captured by the Lidar system 15, two procedures are concurrently performed which are referred to as activation tagging and geometric tagging. For the activation tagging, it is decided for each label 19 whether the respective label 19 can be perceived in the input or primary data captured by the radar sensors 13 or whether the label 19 cannot be perceived in the primary data and would therefore force the machine learning algorithm to predict a label or object where no signal exists, which would lead to an increase of false detection rates.

The raw data received by the radar sensors 13 are processed in order to generate a so-called compressed data cube (CDC) as a reference for assigning the suitable attribute to the labels 19. For each radar scan or time step, the compressed data cube includes a range dimension, a range rate or doppler dimension and an antenna response dimension.

As a first step of activation tagging, angles are estimated at which the radar sensors 13 are able to perceive energy. The angles are estimated by using a classical angle finding procedure, e.g. a fast Fourier transform (FFT) or an iterative adaptive approach (IAA). As a result, a three-dimensional compressed data cube is generated including range, range rate and angle dimensions. Thereafter, the perceived radar energy is normalized, e.g. using a corner reflector response or a noise floor estimation.

As a next step, a speed vector is assigned to each label 19 (see Fig. 1). That is, the movement of the bounding boxes representing the labels 19 is monitored over time via the auxiliary data from the Lidar system 15 (see Fig. 2). At two different points in time, the labels 19 (see Fig. 1) will have different spatial positions if the velocity of the objects they enclose is greater than zero. Via the position differences, the absolute value and the direction of the speed vector can be estimated. The speed vector is projected to the radial direction of the radar sensors 13 (see Fig. 2) in order to estimate a correspondence to the range rate or doppler dimension of the compressed data cube which is based on the data from the radar sensors 13.

In addition to the range rate which is estimated based on the respective speed vector of the label 19, an expected distance and an expected angle with respect to the position of the radar sensors 13 are determined for each label 19. Based on the expected distance, range rate and angle for the respective label 19 which are derived from Lidar data 23 (see Fig. 2), a reverse lookup is performed in the compressed data cube in order to extract the radar energy which is related to the respective label.

In Fig. 1, the normalized radar energy 21 is represented by the shadows which are indicated by respective arrows, and the normalized energy which is related to the respective label 19 is represented by the respective part of the shadows (representing the radar energy 21) which falls into the respective bounding box representing the label 19. As is shown in Fig. 2, each bounding box or label 19 typically includes more than one Lidar data point 23 which is detected by the Lidar system 15. Therefore, the steps of determining the speed vector and estimating the expected distance, the range rate and the angle are repeated for each Lidar data point 23 belonging to the respective label 19 or bounding box in order to extract a respective normalized radar energy for each Lidar data point 23. For the respective label 19, the normalized radar energy is determined as the mean value over the energy values determined for the Lidar data points 23 which are related to the respective bounding box or label 19. Alternatively, the maximum value or the sum over all normalized radar energy values of the Lidar data point 23 belonging to the respective label 19 may be estimated.

**If** the normalized radar energy is greater than or equal to a predefined threshold for the respective label 19, this label can be perceived by the radar sensors 13. Therefore, the care attribute is assigned to this label 19. Conversely, if the normalized radar energy is smaller than the predefined threshold for a certain label 19, this label is regarded is not perceivable for the radar sensors 13. Hence, the no-care attribute is assigned to this label 19. As shown in Fig. 1, the attribute 22 is the care attribute for those labels 19 for which sufficient normalized radar energy 21 has been determined, whereas the attribute 22 is the no-care attribute for the other labels 19 for which the normalized radar energy 21 is too low.

The reliability of the activation tagging described above, i.e. associating the normalized radar energy with the respective labels 19, can be limited by a high angular uncertainty of the radar detection. The high angular uncertainty can be recognized in Fig. 1 in which the shadows representing the normalized radar energy 21 extend over quite a far range in the azimuth angle. While this drawback may be reduced for moving labels 19 by considering the range rate or doppler dimension of the compressed data cube, the angular uncertainty can be a problem for activation tagging of stationary or almost stationary labels 19 for which the range rate or doppler dimension is close to zero. Due to the angular uncertainty, labels 19 which are actually occluded for the radar sensors 13 may erroneously be assigned the care attribute although the respective label 19 may be hidden e.g. behind another object or label 19.

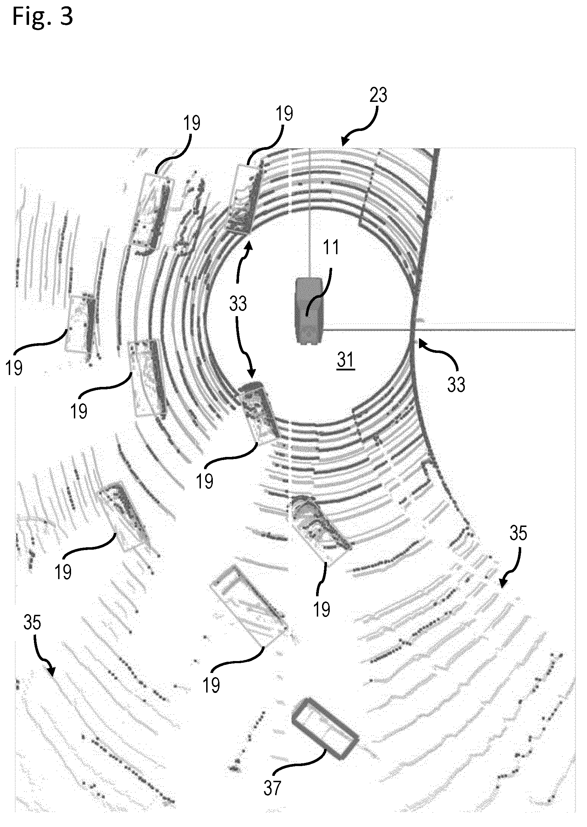

Therefore, a second procedure which is called geometric tagging is additionally considered which determines whether a direct line of sight 25 (see Fig. 2) exists between the radar sensors 13 and the respective label 19, i.e. between at least one of the radar sensors 13 and the Lidar detection points 23 which belong to the respective label 19. Since a Lidar point cloud is dense (see e.g. Fig. 3), i.e. much denser than a radar point cloud, the geometric tagging can reliably determine whether an object or label 19 is occluded for the radar sensors 13 or not.

For the geometric tagging, the Lidar data points 23 are selected first which belong to the respective bounding box or label 19. The selected Lidar data points 23 are transformed into a coordinate system of the radar sensors 13, i.e. into the "perspective" of the radar sensors 13. While for the activation tagging a "map" for the normalized radar energy has been considered (see Fig. 1) for all radar sensors 13, for the geometric tagging each antenna of the radar sensors 13 is considered separately. That is, the radar sensors 13 include an array of radar antennas having slightly different locations at the host vehicle 11. In Fig. 2, the situation for a single antenna is shown with respect to the visibility of the Lidar data points 23.

Each antenna of the radar sensors 13 has a certain aperture angle or instrumental field of view. For the geometric tagging, all Lidar data points 23 which are located outside the aperture angle or instrumental field of view of the respective antenna are therefore marked as "occluded" for the respective antenna. For the remaining Lidar data points 23, a cylinder 27 (see Fig. 2) is wrapped around the origin of the radar coordinate system, i.e. around the respective antenna. The cylinder axis is in parallel to the upright axis (z-axis) of the vehicle coordinate system 16 (see Fig. 1).

The surface of the cylinder 27 is divided into pixel areas, and the Lidar data points 23 which fall into the aperture angle or instrumental field of view of the respective antenna of the radar sensors 13 are projected to the surface of the cylinder 27. For each pixel area of the cylinder 27, the projections of Lidar data points 23 are considered which fall into this area, and these Lidar data points 23 are sorted with respect to their distance to the origin of the radar coordinate system. The Lidar data point 23 having the closest distance to the respective radar sensor 13 is regarded as visible for the respective pixel area, while all further Lidar data points 23 are marked as "occluded" for this pixel area and for the respective antenna.

In the example shown in Fig. 2, all Lidar data points 23 of the left label 19 are considered as visible for the radar sensors 13, while for the right label 19 the upper three Lidar data points 23 are regarded as visible only since they have a direct line of sight to at least one of the radar sensors 13, and the further Lidar data points denoted by 29 are marked as "occluded" since there is no direct line of sight to one of the radar sensors 13. In detail, for the occluded Lidar data points 29 there is another Lidar data point 23 which has a projection within the same pixel area on the cylinder 27 and which has a closer distance to the origin of the radar coordinate system.

In order to determine whether the entire bounding box or label 19 is regarded as occluded for the radar sensors 13, the number of Lidar data points 23 belonging to the respective label 19 and being visible (i.e. not marked as "occluded") for at least one single radar antenna is counted. If this number of visible Lidar data points 23 is lower than a visibility threshold, the no-care attribute is assigned to the respective label 19. The visibility threshold may be set to two Lidar data points, for example. In this case, the right object or label 19 as shown in Fig. 2 would be assigned the care attribute although the Lidar data points 29 are marked as occluded.

Fig. 3 depicts a practical example for a cloud of Lidar data points 23 detected by the Lidar system 15 of the vehicle 11. Since the Lidar system 15 is mounted on the roof of the host vehicle 11, there is a circle or cylinder around the vehicle 11 denoting a region 31 for which no Lidar data points 23 are available. The darker Lidar data points denoted by 33 are marked as visible by the geometric tagging procedure as described above, while the lighter Lidar data point denoted by 35 are marked as occluded for the radar sensors 13.

For most of the bounding boxes or labels 19 which are shown in Fig. 3, there is a plurality of visible Lidar data points 33, i.e. visible for the radar sensors 13. Therefore, the care attribute is assigned to these labels by the geometric tagging. For the bounding box or label in the lower part of Fig. 3 which is denoted by 37, there are Lidar data points 23 which belong to this bounding box, but these Lidar data points 23 are marked as occluded Lidar data points 35 by the geometric tagging. Simply speaking, the "view" from the host vehicle 11 to the label 37 is blocked by the other bounding boxes or labels 19 in between. Hence, the number of visible Lidar data points 33 falls below the visibility threshold for the label 37, and the no-care attribute is assigned to this label 37.

It is noted that the above procedure of geometric tagging is also referred to as z-buffering in computer graphics. As an alternative to the cylinder 27 (see Fig. 2), a sphere could also be used for the projection of the Lidar data points 23 to a respective pixel area in order to determine the Lidar data point 23 having the closest distance via z-buffering.

For providing a reliable ground truth for the training of the machine learning algorithm, the attributes 22 determined by activation tagging and by geometric tagging are combined. That is, a label 19 obtains the care attribute only if both the activation tagging and the geometric tagging have provided the care attribute to the respective label, i.e. if the label can be perceived by the radar sensors 13 due to sufficient radar energy and is geometrically visible (not occluded) for at least one of the radar sensors 13.

For the training of the machine learning algorithm, i.e. of the radar neural network, labelled data are provided which include inputs in the form of primary data from the radar sensors 13 and the labels 19 which are also referred to as ground truth and which are provided in the form of bounding boxes 19 (see Figs. 1 to 3). As mentioned above, each label 19 additionally has a care attribute or a no-care attribute due to the combination of the activation tagging and the geometric tagging. During the training, parameters of the machine learning algorithm or radar neural network are adjusted for classification and regression. This adjustment is controlled via a loss function which is based on error signals due to a comparison between predictions of the model or machine learning algorithm and the desired output being represented by the labels 19. The goal of the training procedure is to minimize the loss function.

During the training, two types of contributions may be received by the loss function. For positive loss contributions, weights of a model on which the machine learning algorithm relies are increased if these weights contribute constructively to a prediction corresponding to the ground truth or label 19. Conversely, for negative loss contributions the weights of the model are decreased if these weights contribute constructively to a prediction which does not correspond to the ground truth, i.e. one of the labels 19.

For the training procedure according to the present disclosure, the labels 19 having the care attribute are generally permitted to provide positive and negative loss contributions to the loss function. For the labels 19 having the no-care attribute, neither positive nor negative contributions could be permitted, i.e. labels having the no-care attribute could simply be ignored. Hence, the machine learning algorithm could not be forced to predict any label or object which is not perceivable by the radar sensors 13. However, any wrong prediction would also be ignored and not analyzed by a negative loss contribution in this case. Therefore, the negative loss contribution is at least to be permitted for labels having the non-care attribute.

To improve the training procedure, a dynamic positive loss contribution is also permitted for the labels 19 having the no-care attribute. In detail, a positive loss contribution is generated for a label 19 having a no-care attribute only if a confidence value P for predicting a ground truth label 19 is greater than a predefined threshold τ, i.e. P > τ, wherein τ is greater than or equal to 0 and smaller than 1.

Allowing dynamic positive loss contributions for labels 19 having a no-care attribute allows the machine learning algorithm or model to use complex queues, i.e. multi-reflections, temporal queues, to predict e.g. the presence of objects. Hence, permitting positive loss contributions for labels having the no-care attribute in a dynamic manner (i.e. by controlling the predefined threshold τ for the confidence value P) will strengthen complex decisions and improve the performance of the model predictions via the machine learning algorithm.

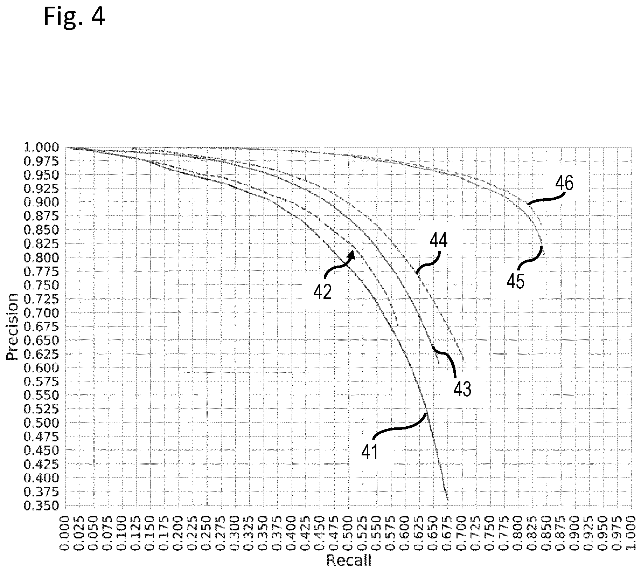

In Fig. 4, the impact of training a machine learning algorithm by using the care and no-care attributes of the labels 19 is depicted. Precision and recall are typical figures of merit for machine learning algorithms, i.e. neural networks. Precision describes the portion of positive predictions or identifications which are actually correct, whereas recall describes the portion of actual positive predictions or identifications which are identified correctly. In addition, recall is a measure for the stability of the machine learning algorithm or neural network.

In Fig. 4, the precision is represented on the y-axis over the recall on the x-axis. An ideal neural network would have a precision and recall in the range of 1, i.e. a data point in the upper right corner of Fig. 4. The curves 41 to 46 as shown in Fig. 4 are generated by calculating precision and recall for different predetermined thresholds τ for the confidence value P of a respective prediction. The prediction is not considered if its confidence value is below the threshold. If the threshold is lowered, recall is usually increased while precision is decreased.

The solid lines 41, 43 and 45 represent the results for a machine learning algorithm which does not use the attributes 22 for the labels 19, i.e. the care and no-care attributes have not used for the training of the machine learning algorithm. In contrast, the dashed lines 42, 44 and 46 depict the results for a machine learning algorithm which has been trained via labels 19 having the care or no-care attribute according to the present disclosure.

Pairs of lines shown in Fig. 4 represent the results for predicting a respective object class, i.e. the lines 41 and 42 are related to the object class "pedestrian", the lines 43 and 44 are related to the object class "moving vehicle", and the lines 45 and 46 are related to the object class "stationary vehicle". As shown by the dashed lines 42, 44, 46 in comparison to the respective solid lines 41, 43, 45 for the same object class, the training of the machine learning algorithm which includes the care and no-care attributes generates a better precision and a better recall in comparison to the training of the machine learning algorithm which does not consider any attributes 22.

### Reference numeral list

- 11: host vehicle
- 13: radar sensor
- 15: Lidar system
- 16: vehicle coordinate system
- 17: processing unit
- 18: x-axis
- 19: bounding box, label
- 20: y-axis
- 21: normalized radar energy
- 23: Lidar data point
- 25: line of sight
- 27: cylinder
- 29: occluded Lidar data point
- 31: region without Lidar data points
- 33: Lidar data point visible for the radar sensor
- 35: Lidar data point occluded for the radar sensor
- 37: occluded label
- 41: line for class "pedestrian", labels without attributes
- 42: line for class "pedestrian", labels with attributes
- 43: line for class "moving vehicle", labels without attributes
- 44: line for class "moving vehicle", labels with attributes
- 45: line for class "stationary vehicle", labels without attributes
- 46: line for class "stationary vehicle", labels with attributes

## Claims

1. Computer implemented method for training a machine learning algorithm configured to process sparse primary data captured by at least one primary sensor (13) in order to determine at least one property of entities in the environment of the at least one primary sensor (13), the method comprising:
providing dense auxiliary data (23, 33, 35) by at least one auxiliary sensor (15),
identifying labels (19) based on the dense auxiliary data (23, 33, 35) which includes determining a respective spatial area to which each label (19) is related,
via a processing unit (17):
assigning a care attribute or a no-care attribute to each identified label (19) by determining a perception capability of the at least one primary sensor (13) for the respective label (19) based on the sparse primary data captured by the at least one primary sensor (13) and based on the dense auxiliary data (23, 33, 35) captured by the at least one auxiliary sensor (15),
wherein determining the perception capability of the at least one primary sensor (13) for the respective label (19) includes:
determining a reference value for the respective spatial area based on the sparse primary data, and
for each label (19), assigning the care attribute to the respective label (19) if the reference value is greater than a reference threshold, and assigning the no-care attribute to the respective label (19) if the reference value is smaller than or equal to the reference threshold,
generating model predictions for the labels (19) via the machine learning algorithm,
defining a loss function for the model predictions,
wherein the loss function receives a positive contribution for which weights of a model on which the machine learning algorithm relies are increased if the weights contribute constructively to a prediction corresponding to the respective label (19), and a negative contribution for which weights of the model are decreased if the weights contribute constructively to a prediction not corresponding to the respective label (19),
permitting the negative contributions to the loss function for all labels (19),
permitting the positive contributions to the loss function for labels (19) having a care attribute, and
permitting the positive contributions to the loss function for labels (19) having a no-care attribute only if a confidence value of the model prediction for the respective label (19) is greater than a predetermined threshold.

2. Method according to claim 1, wherein
the predetermined threshold for the confidence value is zero.

3. Method according to claim 1 or 2, wherein
the at least one primary sensor (13) includes at least one radar sensor (13), and
the reference value is determined based on radar energy (21) detected by the radar sensor (13) within the spatial area to which the respective label (19) is related.

4. Method according to claim 3, wherein
ranges and angles at which radar energy (21) is perceived are determined based on the sparse primary data captured by the radar sensor (13), and
the ranges and angles are assigned to the spatial areas to which the respective labels (19) are related in order to determine the care attribute or the no-care attribute for each label.

5. Method according to claim 3 or 4, wherein
an expected range, an expected range rate and an expected angle are estimated for each label (19) based on the dense auxiliary data (23, 33, 35),
the expected range, the expected range rate and the expected angle of the respective label (19) are assigned to a range, a range rate and an angle derived from the sparse primary data of the radar sensor (13) in order to determine the radar energy (21) associated with the respective label (19).

6. Method according to claim 5, wherein
the expected range rate is estimated for each label (19) based on a speed vector which is estimated for a respective label (19) by using differences of label positions determined based on the dense auxiliary data (23, 33, 35) at different points in time.

7. Method according to anyone of claims 1 to 6, wherein
a subset of auxiliary data points (23) is selected which are located within the spatial area related to the respective label (19),
for each auxiliary data point (23) of the subset, it is determined whether a direct line of sight (25) exists between the at least one primary sensor (13) and the auxiliary data point (23), and
for each label (19), a care attribute is assigned to the respective label (19) if a ratio of a number of auxiliary data points (23) for which the direct line of sight (25) exists to a total number of auxiliary data points (23) of the subset is greater than a further predetermined threshold.

8. Method according to claim 7, wherein
the at least one primary sensor (13) includes a plurality of radar sensors (13),
the auxiliary data point (23) is regarded as having a direct line of sight (25) to the at least one primary sensor (13) if the auxiliary data point (23) is located within an instrumental field of view of at least one of the radar sensors (13) and has a direct line of sight (25) to at least one of the radar sensors (13).

9. Method according to claim 8, wherein
for each of the radar sensors (13), an specific subset of the auxiliary data points (23) is selected for which the auxiliary data points (23) are related to a respective spatial area within an instrumental field of view of the respective radar sensor (13),
the auxiliary data points (23) of the specific subset are projected to a cylinder (27) or sphere wrapped around an origin of a coordinate system of the respective radar sensor (13),
a surface of the cylinder (27) or sphere is divided into pixel areas,
for each pixel area, the auxiliary data point (23) having a projection within the respective pixel area and having the closest distance to the respective radar sensor (13) is marked as visible,
for each label (19), a number of visible auxiliary data points (23) is determined which are located within the spatial area related to the respective label (19) and which are marked as visible for at least one of the radar sensors (13), and
the care attribute is assigned to the respective label (19) if the number of visible auxiliary data points (23) is greater than a visibility threshold.

10. Method according to anyone of claims 1 to 9, wherein
identifying labels (19) based on the dense auxiliary data (23, 33, 35) includes determining a respective spatial area to which each label (19) is related,
a reference value for the respective spatial area is determined based on the sparse primary data,
a subset of auxiliary data points (23) is selected which are located within the spatial area related to the respective label (19),
for each auxiliary data point (23) of the subset, it is determined whether a direct line of sight (25) exists between the at least one primary sensor (13) and the auxiliary data point (23), and
for each label (19), a care attribute is assigned to the respective label (19) if i) the reference value is greater than a reference threshold and ii) a ratio of a number of auxiliary data points (23) for which the direct line of sight (25) exists to a total number of auxiliary data points (23) of the subset is greater than a further predetermined threshold.

11. Device for training a machine learning algorithm, the device comprising:
at least one primary sensor (13) configured to capture sparse primary data,
at least one auxiliary sensor (15) configured to capture dense auxiliary data (23, 33, 35), and
a processing unit (17),
wherein the machine learning algorithm is configured to process the sparse primary data in order to determine at least one property of entities in the environment of the at least one primary sensor (13),
wherein the processing unit is configured to:
receive labels (19) identified based on the dense auxiliary data (23, 33, 35) and a respective spatial area to which each label (19) is related,
assign a care attribute or a no-care attribute to each identified label (19) by determining a perception capability of the at least one primary sensor (13) for the respective label (19) based on the sparse primary data captured by the at least one primary sensor (13) and based on the dense auxiliary data (23, 33, 35) captured by the at least one auxiliary sensor (15),
wherein determining the perception capability of the at least one primary sensor (13) for the respective label (19) includes:
determining a reference value for the respective spatial area based on the sparse primary data, and
for each label (19), assigning the care attribute to the respective label (19) if the reference value is greater than a reference threshold, and assigning the no-care attribute to the respective label (19) if the reference value is smaller than or equal to the reference threshold,
generate model predictions for the labels (19) via the machine learning algorithm,
define a loss function for the model predictions,
wherein the loss function receives a positive contribution for which weights of a model on which the machine learning algorithm relies are increased if the weights contribute constructively to a prediction corresponding to the respective label (19), and a negative contribution for which weights of the model are decreased if the weights contribute constructively to a prediction not corresponding to the respective label (19),
permit the negative contributions to the loss function for all labels (19),
permit the positive contributions to the loss function for labels (19) having a care attribute, and
permit the positive contributions to the loss function for labels (19) having a no-care attribute only if a confidence value of the model prediction for the respective label (19) is greater than a predetermined threshold.

12. Device according to claim 11, wherein
the at least one primary sensor (13) includes at least one radar sensor and
the at least one auxiliary sensor (15) includes at least one Lidar sensor and/or at least one a camera.

13. Computer system, the computer system being configured to carry out the computer implemented method of at least one of claims 1 to 10.

14. Non-transitory computer readable medium comprising instructions for carrying out the computer implemented method of at least one of claims 1 to 10.

## Patentansprüche

1. Computerimplementiertes Verfahren zum Trainieren eines Algorithmus des maschinellen Lernens, welcher ausgebildet ist, verstreute Primärdaten zu verarbeiten, die durch mindestens einen Primärsensor (13) erfasst werden, um mindestens eine Eigenschaft von Entitäten in der Umgebung des mindestens einen Primärsensors (13) zu ermitteln, wobei das Verfahren umfasst, dass:
dichte Hilfsdaten (23, 33, 35) durch mindestens einen Hilfssensor (15) bereitgestellt werden,
Label (19) basierend auf den dichten Hilfsdaten (23, 33, 35) identifiziert werden, was umfasst, dass ein jeweiliger Raumbereich ermittelt wird, zu dem ein jeweiliges Label (19) gehört,
mittels einer Verarbeitungseinheit (17):
jedem identifizierten Label (19) ein Berücksichtigen-Attribut oder ein Nicht-Berücksichtigen-Attribut zugewiesen wird, indem eine Wahrnehmungsfähigkeit des mindestens einen Primärsensors (13) für das jeweilige Label (19) basierend auf den verstreuten Primärdaten, die durch den mindestens einen Primärsensor (13) erfasst werden, und basierend auf den dichten Hilfsdaten (23, 33, 35), die durch den mindestens einen Hilfssensor (15) erfasst werden, ermittelt wird,
wobei das Ermitteln der Wahrnehmungsfähigkeit des mindestens einen Primärsensors (13) für das jeweilige Label (19) umfasst, dass:
ein Referenzwert für den jeweiligen Raumbereich basierend auf den verstreuten Primärdaten ermittelt wird und
für jedes Label (19) dem jeweiligen Label (19) das Berücksichtigen-Attribut zugewiesen wird, wenn der Referenzwert größer als ein Referenzschwellenwert ist, und dem jeweiligen Label (19) das Nicht-Berücksichtigen-Attribut zugewiesen wird, wenn der Referenzwert kleiner als der Referenzschwellenwert oder diesem gleich ist,
Modellvoraussagen für die Label (19) mittels des Algorithmus des maschinellen Lernens generiert werden,
eine Verlustfunktion für die Modellvoraussagen definiert wird,
wobei die Verlustfunktion einen positiven Beitrag, für welchen Gewichte eines Modells, auf dem der Algorithmus des maschinellen Lernens beruht, erhöht werden, wenn die Gewichte konstruktiv zu einer Voraussage beitragen, die dem jeweiligen Label (19) entspricht, und einen negativen Beitrag empfängt, für welchen Gewichte des Modells verringert werden, wenn die Gewichte konstruktiv zu einer Voraussage beitragen, die dem jeweiligen Label (19) nicht entspricht,
die negativen Beiträge zu der Verlustfunktion für alle Label (19) zugelassen werden,
die positiven Beiträge zu der Verlustfunktion für Label (19) mit einem Berücksichtigen-Attribut zugelassen werden und
die positiven Beiträge zu der Verlustfunktion für Label (19) mit einem Nicht-Berücksichtigen-Attribut nur dann zugelassen werden, wenn ein Konfidenzwert der Modellvoraussage für das jeweilige Label (19) größer als ein vorbestimmter Schwellenwert ist.

2. Verfahren nach Anspruch 1, wobei
der vorbestimmte Schwellenwert für den Konfidenzwert **Null** ist.

3. Verfahren nach Anspruch 1 oder 2, wobei
der mindestens eine Primärsensor (13) mindestens einen Radarsensor (13) umfasst und
der Referenzwert basierend auf einer Radarenergie (21) ermittelt wird, die durch den Radarsensor (13) innerhalb des Raumbereichs detektiert wird, zu welchem das jeweilige Label (19) gehört.

4. Verfahren nach Anspruch 3, wobei
Entfernungen und Winkel, bei denen die Radarenergie (21) wahrgenommen wird, basierend auf den verstreuten Primärdaten ermittelt werden, die durch den Radarsensor (13) erfasst werden, und
die Entfernungen und Winkel den Raumbereichen zugewiesen werden, zu denen die jeweiligen Label (19) gehören, um das Berücksichtigen-Attribut oder das Nicht-Berücksichtigen-Attribut für jedes Label zu ermitteln.

5. Verfahren nach Anspruch 3 oder 4, wobei
eine erwartete Entfernung, eine erwartete Radialgeschwindigkeit und ein erwarteter Winkel für jedes Label (19) basierend auf den dichten Hilfsdaten (23, 33, 35) geschätzt werden,
die erwartete Entfernung, die erwartete Radialgeschwindigkeit und der erwartete Winkel des jeweiligen Labels (19) einer Entfernung, einer Radialgeschwindigkeit und einem Winkel zugewiesen werden, die anhand der verstreuten Primärdaten des Radarsensors (13) abgeleitet werden, um die Radarenergie (21) zu ermitteln, die dem jeweiligen Label (19) zugeordnet ist.

6. Verfahren nach Anspruch 5, wobei
die erwartete Radialgeschwindigkeit für jedes Label (19) basierend auf einem Geschwindigkeitsvektor geschätzt wird, der für ein jeweiliges Label (19) unter Verwendung von Differenzen von Labelpositionen geschätzt wird, die basierend auf den dichten Hilfsdaten (23, 33, 35) zu verschiedenen Zeitpunkten ermittelt werden.

7. Verfahren nach einem der Ansprüche 1 bis 6, wobei
eine Teilmenge von Hilfsdatenpunkten (23) ausgewählt wird, die innerhalb des Raumbereichs angeordnet sind, zu dem das jeweilige Label (19) gehört,
für jeden Hilfsdatenpunkt (23) der Teilmenge ermittelt wird, ob eine direkte Sichtlinie (25) zwischen dem mindestens einen Primärsensor (13) und dem Hilfsdatenpunkt (23) existiert, und
für jedes Label (19) dem jeweiligen Label (19) ein Berücksichtigen-Attribut zugewiesen wird, wenn ein Verhältnis einer Anzahl von Hilfsdatenpunkten (23), für welche die direkte Sichtlinie (25) existiert, zu einer Gesamtanzahl von Hilfsdatenpunkten (23) der Teilmenge größer als ein weiterer vorbestimmter Schwellenwert ist.

8. Verfahren nach Anspruch 7, wobei
der mindestens eine Primärsensor (13) mehrere Radarsensoren (13) umfasst,
der Hilfsdatenpunkt (23) derart bewertet wird, dass er eine direkte Sichtlinie (25) zu dem mindestens einen Primärsensor (13) aufweist, wenn der Hilfsdatenpunkt (23) innerhalb eines instrumentellen Gesichtsfelds mindestens eines der Radarsensoren (13) angeordnet ist und eine direkte Sichtlinie (25) zu mindestens einem der Radarsensoren (13) aufweist.

9. Verfahren nach Anspruch 8, wobei
für jeden der Radarsensoren (13) eine spezifische Teilmenge der Hilfsdatenpunkte (23) ausgewählt wird, für welche die Hilfsdatenpunkte (23) zu einem jeweiligen Raumbereich innerhalb eines instrumentellen Gesichtsfelds des jeweiligen Radarsensors (13) gehören,
die Hilfsdatenpunkte (23) der spezifischen Teilmenge auf einen Zylinder (27) oder eine Kugel projiziert werden, der bzw. die einen Ursprung eines Koordinatensystems des jeweiligen Radarsensors (13) umhüllt,
eine Oberfläche des Zylinders (27) oder der Kugel in Pixelflächen aufgeteilt wird,
für jede Pixelfläche derjenige Hilfsdatenpunkt (23) mit einer Projektion innerhalb der jeweiligen Pixelfläche und mit der nächsten Distanz zu dem jeweiligen Radarsensor (13) als sichtbar markiert wird,
für jedes Label (19) eine Anzahl sichtbarer Hilfsdatenpunkte (23) ermittelt wird, die innerhalb des Raumbereichs angeordnet sind, zu dem das jeweilige Label (19) gehört, und die für mindestens einen der Radarsensoren (13) als sichtbar markiert sind, und
das Berücksichtigen-Attribut dem jeweiligen Label (19) zugewiesen wird, wenn die Anzahl sichtbarer Hilfsdatenpunkte (23) größer als ein Sichtbarkeitsschwellenwert ist.

10. Verfahren nach einem der Ansprüche 1 bis 9, wobei
das Identifizieren der Label (19) basierend auf den dichten Hilfsdaten (23, 33, 35) umfasst, dass ein jeweiliger Raumbereich ermittelt wird, zu welchem das jeweilige Label (19) gehört,
ein Referenzwert für den jeweiligen Raumbereich basierend auf den verstreuten Primärdaten ermittelt wird,
eine Teilmenge von Hilfsdatenpunkten (23) ausgewählt wird, die innerhalb des Raumbereichs angeordnet sind, zu dem das jeweilige Label (19) gehört,
für jeden Hilfsdatenpunkt (23) der Teilmenge ermittelt wird, ob eine direkte Sichtlinie (25) zwischen dem mindestens einen Primärsensor (13) und dem Hilfsdatenpunkt (23) existiert, und
für jedes Label (19) dem jeweiligen Label (19) ein Berücksichtigen-Attribut zugewiesen wird, wenn i) der Referenzwert größer als ein Referenzschwellenwert ist und ii) ein Verhältnis einer Anzahl von Hilfsdatenpunkten (23), für welche die direkte Sichtlinie (25) existiert, zu einer Gesamtanzahl von Hilfsdatenpunkten (23) der Teilmenge größer als ein weiterer vorbestimmter Schwellenwert ist.

11. Vorrichtung zum Trainieren eines Algorithmus des maschinellen Lernens, wobei die Vorrichtung umfasst:
mindestens einen Primärsensor (13), der ausgebildet ist, verstreute Primärdaten zu erfassen,
mindestens einen Hilfssensor (15), der ausgebildet ist, dichte Hilfsdaten (23, 33, 35) zu erfassen, und
eine Verarbeitungseinheit (17),
wobei der Algorithmus des maschinellen Lernens ausgebildet ist, die verstreuten Primärdaten zu verarbeiten, um mindestens eine Eigenschaft von Entitäten in der Umgebung des mindestens einen Primärsensors (13) zu ermitteln,
wobei die Verarbeitungseinheit ausgebildet ist:
Label (19), die basierend auf den dichten Hilfsdaten (23, 33, 35) identifiziert sind, und einen jeweiligen Raumbereich zu empfangen, zu dem das jeweilige Label (19) gehört,
jedem identifizierten Label (19) ein Berücksichtigen-Attribut oder ein Nicht-Berücksichtigen-Attribut zuzuweisen, indem eine Wahrnehmungsfähigkeit des mindestens einen Primärsensors (13) für das jeweilige Label (19) basierend auf den verstreuten Primärdaten, die durch den mindestens einen Primärsensor (13) erfasst werden, und basierend auf den dichten Hilfsdaten (23, 33, 35) ermittelt wird, die durch den mindestens einen Hilfssensor (15) erfasst werden,
wobei das Ermitteln der Wahrnehmungsfähigkeit des mindestens einen Primärsensors (13) für das jeweilige Label (19) umfasst, dass:
ein Referenzwert für den jeweiligen Raumbereich basierend auf den verstreuten Primärdaten ermittelt wird und
für jedes Label (19) dem jeweiligen Label (19) das Berücksichtigen-Attribut zugewiesen wird, wenn der Referenzwert größer als ein Referenzschwellenwert ist, und dem jeweiligen Label (19) das Nicht-Berücksichtigen-Attribut zugewiesen wird, wenn der Referenzwert kleiner als der Referenzschwellenwert oder gleich diesem ist,
Modellvoraussagen für die Label (19) mittels des Algorithmus des maschinellen Lernens zu generieren,
eine Verlustfunktion für die Modellvoraussagen zu definieren,
wobei die Verlustfunktion einen positiven Beitrag, für welchen Gewichte eines Modells, auf dem der Algorithmus des maschinellen Lernens beruht, erhöht werden, wenn die Gewichte konstruktiv zu einer Voraussage beitragen, die dem jeweiligen Label (19) entspricht, und einen negativen Beitrag empfängt, für welchen Gewichte des Modells verringert werden, wenn die Gewichte konstruktiv zu einer Voraussage beitragen, die dem jeweiligen Label (19) nicht entspricht,
die negativen Beiträge zu der Verlustfunktion für alle Label (19) zuzulassen,
die positiven Beiträge zu der Verlustfunktion für Label (19) mit einem Berücksichtigen-Attribut zuzulassen und
die positiven Beiträge zu der Verlustfunktion für Label (19) mit einem Nicht-Berücksichtigen-Attribut nur dann zuzulassen, wenn ein Konfidenzwert der Modellfunktion für das jeweilige Label (19) größer als ein vorbestimmter Schwellenwert ist.

12. Vorrichtung nach Anspruch 11, wobei
der mindestens eine Primärsensor (13) mindestens einen Radarsensor umfasst und der mindestens eine Hilfssensor (15) mindestens einen Lidar-Sensor und/oder mindestens eine Kamera umfasst.

13. Computersystem, wobei das Computersystem ausgebildet ist, das computerimplementierte Verfahren nach mindestens einem der Ansprüche 1 bis 10 auszuführen.

14. Nichtflüchtiges computerlesbares Medium, das Anweisungen zum Ausführen des computerimplementierten Verfahrens nach mindestens einem der Ansprüche 1 bis 10 umfasst.

## Revendications

1. Procédé mis en œuvre par ordinateur pour entraîner un algorithme d'apprentissage automatique configuré pour traiter des données primaires éparses capturées par au moins un capteur primaire (13) afin de déterminer au moins une propriété d'entités dans l'environnement dudit au moins un capteur primaire (13), le procédé comprenant les étapes consistant à :
fournir des données auxiliaires denses (23, 33, 35) via au moins un capteur auxiliaire (15),
identifier des étiquettes (19) sur la base des données auxiliaires denses (23, 33, 35) incluant de déterminer une zone spatiale respective à laquelle est reliée chaque étiquette (19),
via une unité de traitement (17) :
attribuer un attribut d'attention ou un attribut de non-attention à chaque étiquette identifiée (19) en déterminant une capacité de perception dudit au moins un capteur primaire (13) pour l'étiquette respective (19) sur la base des données primaires éparses capturées par ledit au moins un capteur primaire (13) et sur la base des données auxiliaires denses (23, 33, 35) capturées par ledit au moins un capteur auxiliaire (15),
dans lequel l'étape consistant à déterminer la capacité de perception dudit au moins un capteur primaire (13) pour l'étiquette respective (19) inclut de :
déterminer une valeur de référence pour la zone spatiale respective sur la base des données primaires éparses, et
pour chaque étiquette (19), attribuer l'attribut d'attention à l'étiquette respective (19) si la valeur de référence est supérieure à une référence seuil,
et attribuer l'attribut de non-attention à l'étiquette respective (19) si la valeur de référence est inférieure ou égale à la référence seuil,
générer des prédictions de modèle pour les étiquettes (19) via l'algorithme d'apprentissage automatique,
définir une fonction de perte pour les prédictions de modèle,
dans lequel la fonction de perte reçoit une contribution positive pour laquelle des pondérations d'un modèle sur lequel se fonde l'algorithme d'apprentissage automatique sont augmentées si les pondérations contribuent de manière constructive à une prédiction qui correspond à l'étiquette respective (19), et une contribution négative pour laquelle des pondérations du modèle sont diminuées si les pondérations contribuent de manière constructive à une prédiction qui ne correspond pas à l'étiquette respective (19),
permettre les contribution négatives à la fonction de perte pour toutes les étiquettes (19),
permettre les contributions positives à la fonction de perte pour les étiquettes (19) ayant un attribut d'attention, et
permettre les contributions positives à la fonction de perte pour les étiquettes (19) ayant un attribut de non-attention uniquement si une valeur de confiance de la prédiction de modèle pour l'étiquette respective (19) est supérieure à un seuil prédéterminé.

2. Procédé selon la revendication 1, dans lequel
le second seuil prédéterminé pour la valeur de confiance est égal à zéro.

3. Procédé selon la revendication 1 ou 2, dans lequel
ledit au moins un capteur primaire (13) inclut au moins un capteur radar (13), et
la valeur de référence est déterminée sur la base d'une énergie radar (21) détectée par le capteur radar (13) à l'intérieur de la zone spatiale à laquelle est reliée l'étiquette respective (19).

4. Procédé selon la revendication 3, dans lequel
des distances et des angles auxquels est perçue une énergie radar (21) sont déterminés sur la base des données primaires éparses capturées par le capteur radar (13), et
les distances et les angles sont attribués aux zones spatiales auxquelles sont reliées les étiquettes respectives (19) afin de déterminer l'attribut d'attention ou l'attribut de non-attention pour chaque étiquette.

5. Procédé selon la revendication 3 ou 4, dans lequel
une distance escomptée, un taux de distance escompté et un angle escompté sont estimés pour chaque étiquette (19) sur la base des données auxiliaires denses (23, 33, 35),
la distance escomptée, le taux de distance escompté et l'angle escompté de l'étiquette respective (19) sont attribués à une distance, à un taux de distance et à un angle dérivés des données primaires éparses du capteur radar (13) afin de déterminer l'énergie radar (21) associée à l'étiquette respective (19).

6. Procédé selon la revendication 5, dans lequel
le taux de distance escompté est estimé pour chaque étiquette (19) sur la base d'un vecteur vitesse qui est estimé pour une étiquette respective (19) à l'aide de différences de positions d'étiquettes déterminées sur la base des données auxiliaires denses (23, 33, 35) à des points différents dans le temps.

7. Procédé selon l'une quelconque des revendications 1 à 6, dans lequel il est sélectionné un sous-ensemble de points de données auxiliaires (23) qui sont situés à l'intérieur de la zone spatiale reliée à l'étiquette respective (19), pour chaque point de données auxiliaires (23) du sous-ensemble, il est déterminé s'il y a une ligne de vue directe (25) entre ledit au moins un capteur primaire (13) et le point de données auxiliaires (23), et
pour chaque étiquette (19), un attribut d'attention est attribué à l'étiquette respective (19) si un rapport d'un nombre de points de données auxiliaires (23) pour lequel il y a la ligne de vue directe (25) sur un nombre total de points de données auxiliaires (23) du sous-ensemble est supérieur à un seuil prédéterminé supplémentaire.

8. Procédé selon la revendication 7, dans lequel
ledit au moins un capteur primaire (13) inclut une pluralité de capteurs radar (13),
le point de données auxiliaires (23) est considéré comme ayant une ligne de vue directe (25) sur ledit au moins un capteur primaire (13) si le point de données auxiliaires (23) est situé à l'intérieur d'un champ de vision instrumental de l'un au moins des capteurs radar (13) et a une ligne de vue directe (25) sur l'un au moins des capteurs radar (13).

9. Procédé selon la revendication 8, dans lequel
pour chacun des capteurs radar (13), il est sélectionné un sous-ensemble spécifique des points de données auxiliaires (23) pour lequel les points des données auxiliaires (23) sont reliés à une zone spatiale respective à l'intérieur d'un champ de vision instrumental du capteur radar respectif (13),
les points de données auxiliaires (23) du sous-ensemble spécifique sont projetés sur un cylindre (27) ou une sphère enveloppés autour d'une origine d'un système de coordonnées du capteur radar respectif (13),
une surface du cylindre (27) ou de la sphère est divisée en zone de pixels, pour chaque zone de pixels, le point de données auxiliaires (23) ayant une projection à l'intérieur de la zone de pixels respective et ayant la distance la plus proche du capteur radar respectif (13) est marqué comme visible,
pour chaque étiquette (19), il est déterminé un nombre de points de données auxiliaires visibles (23) qui sont situés à l'intérieur de la zone spatiale reliée à l'étiquette respective (19) et qui sont marqués comme visibles pour l'un au moins des capteurs radar (13), et
l'attribut d'attention est attribué à l'étiquette respective (19) si le nombre de points de données auxiliaires visibles (23) est supérieur à une visibilité seuil.

10. Procédé selon l'une quelconque des revendications 1 à 9, dans lequel l'étape consistant à identifier des étiquettes (19) sur la base des données auxiliaires denses (23, 33, 35) inclut de déterminer une zone spatiale respective à laquelle est reliée chaque étiquette (19),
une valeur de référence pour la zone spatiale respective est déterminée sur la base des données primaires éparses,
il est sélectionné un sous-ensemble de points de données auxiliaires (23) qui sont situés à l'intérieur de la zone spatiale reliée à l'étiquette respective (19),
pour chaque point de données auxiliaires (23) du sous-ensemble, il est déterminé s'il y a une ligne de vue directe (25) entre ledit au moins un capteur primaire (13) et le point de données auxiliaires (23), et
pour chaque étiquette (19), un attribut d'attention est attribué à l'étiquette respective (19) si i) la valeur de référence est supérieure à une référence seuil et ii) un rapport d'un nombre de points de données auxiliaires (23) pour lequel il y a la ligne de vue directe (25) sur un nombre total de points de données auxiliaires (23) du sous-ensemble est supérieur à un seuil prédéterminé supplémentaire.

11. Dispositif destiné à entraîner un algorithme d'apprentissage automatique, le dispositif comprenant :
au moins un capteur primaire (13) configuré pour capturer des données primaires éparses,
au moins un capteur auxiliaire (15) configuré pour capturer des données auxiliaires denses (23, 33, 35), et
une unité de traitement (17),
dans lequel l'algorithme de d'apprentissage automatique est configuré pour traiter les données primaires éparses afin de déterminer au moins une propriété d'entités dans l'environnement dudit au moins un capteur primaire (13),
dans lequel l'unité de traitement est configurée pour :
recevoir des étiquettes (19) identifiées sur la base des données auxiliaires denses (23, 33, 35) et d'une zone spatiale respective à laquelle est reliée chaque étiquette (19),
attribuer un attribut d'attention ou un attribut de non-attention à chaque étiquette identifiée (19) en déterminant une capacité de perception dudit au moins un capteur primaire (13) pour l'étiquette respective (19) sur la base des données primaires éparses capturées par ledit au moins un capteur primaire (13) et sur la base des données auxiliaires denses (23, 33, 35) capturées par ledit au moins un capteur auxiliaire (15),
dans lequel la détermination de la capacité de perception dudit au moins un capteur primaire (13) pour l'étiquette respective (19) inclut de :
déterminer une valeur de référence pour la zone spatiale respective sur la base des données primaires éparses, et
pour chaque étiquette (19), attribuer l'attribut d'attention à l'étiquette respective (19) si la valeur de référence est supérieure à une référence seuil, et attribuer l'attribut de non-attention à l'étiquette respective (19) si la valeur de référence est inférieure ou égale à la référence seuil,
générer des prédictions de modèle pour les étiquettes (19) via l'algorithme d'apprentissage automatique,
définir une fonction de perte pour les prédictions de modèle,
dans lequel la fonction de perte reçoit une contribution positive pour laquelle des pondérations d'un modèle sur lequel se fonde l'algorithme d'apprentissage automatique sont augmentées si les pondérations contribuent de manière constructive à une prédiction qui correspond à l'étiquette respective (19), et une contribution négative pour laquelle des pondérations du modèle sont diminuées si les pondérations contribuent de manière constructive à une prédiction qui ne correspond pas à l'étiquette respective (19),
permettre les contribution négatives à la fonction de perte pour toutes les étiquettes (19),
permettre les contributions positives à la fonction de perte pour les étiquettes (19) ayant un attribut d'attention, et
permettre les contributions positives à la fonction de perte pour les étiquettes (19) ayant un attribut de non-attention uniquement si une valeur de confiance de la prédiction de modèle pour l'étiquette respective (19) est supérieure à un seuil prédéterminé.

12. Dispositif selon la revendication 11, dans lequel
ledit au moins un capteur primaire (13) inclut au moins un capteur radar et ledit au moins un capteur auxiliaire (15) inclut au moins un capteur Lidar et/ou au moins une caméra.

13. Système d'ordinateur, le système d'ordinateur étant configuré pour exécuter le procédé mis en œuvre par ordinateur selon l'une au moins des revendications 1 à 10.

14. Support non transitoire lisible par ordinateur comprenant des instructions destinées à exécuter le procédé mis en œuvre par ordinateur selon l'une au moins des revendications 1 à 10.
